# EUROPEAN PATENT APPLICATION

(11) **EP 4 684 931 A1**
(43) Date of publication of application: **28.01.2026**
(21) Application number: 24773751.3
(22) Date of filing: 03.01.2024
(51) Int. Cl.: B26D 7/18, B26F 3/12

(54) **CUTTING-OFF DEVICE AND WINDING MACHINE**

(30) Priority: 21.03.2023 CN 202320631273 U
(71) Applicant: Sunwoda Mobility Energy Technology Co., Ltd., Shenzhen, Guangdong 518107 (CN)
(72) Inventor: FAN, Hongbo, Shenzhen, Guangdong 518107 (CN); YUAN, Zhengpu, Shenzhen, Guangdong 518107 (CN)
(74) Representative: Boult Wade Tennant LLP
(86) International application number: PCT/CN2024/070332
(87) International publication number: WO 2024/193181

(57) **Abstract**

A cutoff apparatus and a winding machine are disclosed. The cutoff apparatus comprises: a base plate; a cutoff assembly disposed on the base plate, the cutoff assembly comprising a cutoff frame on which a cutoff member is disposed; a dust removal assembly disposed on the base plate, the dust removal assembly comprising a dust suction box and a negative pressure member, wherein a dust collection chamber is formed in the dust suction box, the negative pressure member is in communication with the dust collection chamber, the dust suction box is provided with a dust suction port on a side facing the cutoff member, and the dust suction port is in communication with the dust collection chamber; an air inlet assembly disposed on the base plate, wherein the dust removal assembly and the air inlet assembly are respectively disposed on two sides of the cutoff member, the air inlet assembly comprises an air inlet member that is recessed on a side facing the cutoff member to form a cutoff groove, and the air inlet member is provided with an air inlet hole in communication with the cutoff groove; and a driving assembly, configured to drive at least one of the cutoff assembly, the dust removal assembly, and the air inlet assembly to move, such that the cutoff member is located between the air inlet member and the dust suction box, and the air inlet member abuts the dust suction box. An opening of the cutoff groove is capable of covering the dust suction port to form a working chamber for accommodating the cutoff member; the cutoff member cuts off a material within the operation chamber, and air flowing into the operation chamber through the air inlet hole carries dust on the material toward the dust suction port to flow into the dust collection chamber.

## Description

### CROSS-REFERENCE TO RELATED APPLICATIONS

This disclosure claims all the benefits of the Chinese utility model with application number 202320631273.0, filed with the China National Intellectual Property Administration on March 21, 2023, and titled "CUTOFF APPARATUS AND WINDING MACHINE", the entire contents of which are incorporated herein by reference.

### FIELD

The present disclosure relates generally to the technical field of lithium battery production equipment, and more particularly, to a cutoff apparatus and a winding machine.

### BACKGROUND

**In** the existing lithium battery production process, the separator thermal cutoff process typically uses heating tubes and thermocouples for temperature control. When the separator is cut off with a cutter, dust is easily generated after the separator is cut, which can contaminate the battery cell and internal parts of the equipment. To prevent the dust generated after cutting off the separator from contaminating the battery cell, most current separator cutoff apparatuses are provided with a dust collection box, and a fan is used within the dust collection box to generate negative pressure suction to collect the dust generated after the separator is cut off, thereby preventing dust accumulation from affecting battery cell performance. However, because the negative pressure suction only acts at the location of the dust collection box, some dust still cannot be collected after the separator is cut off, and there is still a risk of dust falling into the battery cell, leading to internal short circuits in the battery cell and affecting the safety performance of the battery cell.

### SUMMARY

In a first aspect, the present disclosure provides a cutoff apparatus, which includes:
a base plate;
a cutoff assembly, disposed on the base plate, wherein the cutoff assembly comprises a cutoff frame, and a cutoff member is disposed on the cutoff frame;
a dust removal assembly, disposed on the base plate, wherein the dust removal assembly comprises a dust suction box and a negative pressure member, a dust collection chamber is formed within the dust suction box, the negative pressure member is in communication with the dust collection chamber, the dust suction box is provided with a dust suction port on a side facing the cutoff member, and the dust suction port is in communication with the dust collection chamber;
**an** air inlet assembly, disposed on the base plate, wherein the dust removal assembly and the air inlet assembly are respectively disposed on two sides of the cutoff member, the air inlet assembly comprises an air inlet member, the air inlet member is recessed on a side facing the cutoff member to form a cutoff groove, and the air inlet member is provided with an air inlet hole in communication with the cutoff groove; and
a driving assembly driving at least one of the cutoff assembly, the dust removal assembly, and the air inlet assembly to move, such that the cutoff member is located between the air inlet member and the dust suction box, and the air inlet member abuts the dust suction box;
wherein an opening of the cutoff groove is capable of covering the dust suction port and forming a working chamber for accommodating the cutoff member, the cutoff member cuts off a material within the working chamber, and air flowing into the working chamber through the air inlet hole carries dust on the material toward the dust suction port to flow into the dust collection chamber.

In some embodiments, a plurality of the air inlet holes are provided, and the plurality of air inlet holes are arranged at intervals along an extending direction of the dust suction port.

In some embodiments, an axial direction of an air outlet end of the air inlet hole is parallel to an axial direction of the dust suction port, and when the opening of the cutoff groove covers the dust suction port, the air inlet hole is disposed corresponding to the dust suction port.

In some embodiments, the air inlet hole is provided through the air inlet member along the axial direction of the dust suction port.

In some embodiments, the air inlet assembly further comprises a buffering member disposed on the air inlet member, the buffering member and the cutoff groove are disposed on a same side of the air inlet member, the buffering member comprises a first buffering portion and a second buffering portion, and the first buffering portion and the second buffering portion are respectively disposed on two sides of the cutoff groove perpendicular to its own extending direction.

In some embodiments, the cutoff frame comprises a first frame body and a second frame body, the cutoff member is disposed between the first frame body and the second frame body, the first frame body and the second frame body are respectively assembled and connected to two opposite side walls of the dust suction box, and the cutoff member and the dust suction port are disposed at an interval in an opening direction of the dust suction port.

In some embodiments, the driving assembly drives the dust suction box to move in a direction toward or away from the cutoff groove, and the dust suction box drives the cutoff member to move synchronously.

In some embodiments, the dust suction box and the air inlet member are disposed at an interval, and the dust suction port of the dust suction box is aligned with the cutoff groove of the air inlet member; the driving assembly comprises a driving cylinder, and a piston rod of the driving cylinder is connected to a side of the dust suction box away from the air inlet member.

In some embodiments, the dust removal assembly further comprises a dust suction pipe, a first end of the dust suction pipe is in communication with the negative pressure member, and a second end of the dust suction pipe is in communication with the dust collection chamber.

In a second aspect, the present disclosure provides a winding machine, which includes the cutoff apparatus of the present disclosure.

In some embodiments, the cutoff apparatus provided by the present disclosure encloses the cutting position of the object to be cut by fitting the cutoff groove over the dust suction port. It blows air on one side of the object to be cut through the air inlet hole and suctions air on the other side of the object to be cut through the dust suction port, thereby forming a stable velocity flow field within the working chamber. Both opposite sides of the object to be cut are subjected to the force of the air, so as to further improve the collection of dust and other foreign matter generated after cutting off the object to be cut, effectively preventing dust and other foreign matter from falling into the interior of the object to be cut after it is cut off, thereby ensuring the safety performance of the object to be cut.

### BRIEF DESCRIPTION OF DRAWINGS

To more clearly explain the technical solutions in embodiments of the present disclosure, the drawings required for the description of embodiments will be briefly introduced below. It is obvious that the drawings in the following description are only some embodiments of the present disclosure, and for those of ordinary skill in the art, other drawings can be obtained from these drawings without creative effort. In addition, in the drawings, identical components are denoted by identical reference numerals, and the drawings are not drawn to actual scale.
FIG. 1 shows a schematic diagram of an overall structure of a cutoff apparatus provided by an embodiment of the present disclosure;
FIG. 2 shows a schematic structural diagram of the cutoff assembly and the dust removal assembly in FIG. 1; and
FIG. 3 shows a schematic structural diagram of the air inlet assembly in FIG. 1.

### Description of Reference Numerals:

1.Base plate;
2.Cutoff assembly; 21. First frame body; 22. Second frame body; 23. Cutoff member;
3.Dust removal assembly; 31. Dust suction box; 32. Dust suction port; 33. Dust suction pipe;
4.Air inlet assembly; 41. Air inlet member; 42. Cutoff groove; 43. Air inlet hole; 44. Buffering member; 441. First buffering portion; 442. Second buffering portion;
5.Driving assembly.

### DETAILED DESCRIPTION

To make the objectives, technical solutions, and advantages of embodiments of the present disclosure clearer, the technical solutions in embodiments of the present disclosure will be described clearly and completely below with reference to the accompanying drawings in embodiments of the present disclosure. Obviously, the described embodiments are only a part of embodiments of the present disclosure, not all of them. Based on embodiments in the present disclosure, all other embodiments obtained by a person of ordinary skill in the art without making creative efforts shall fall within the protection scope of the present disclosure.

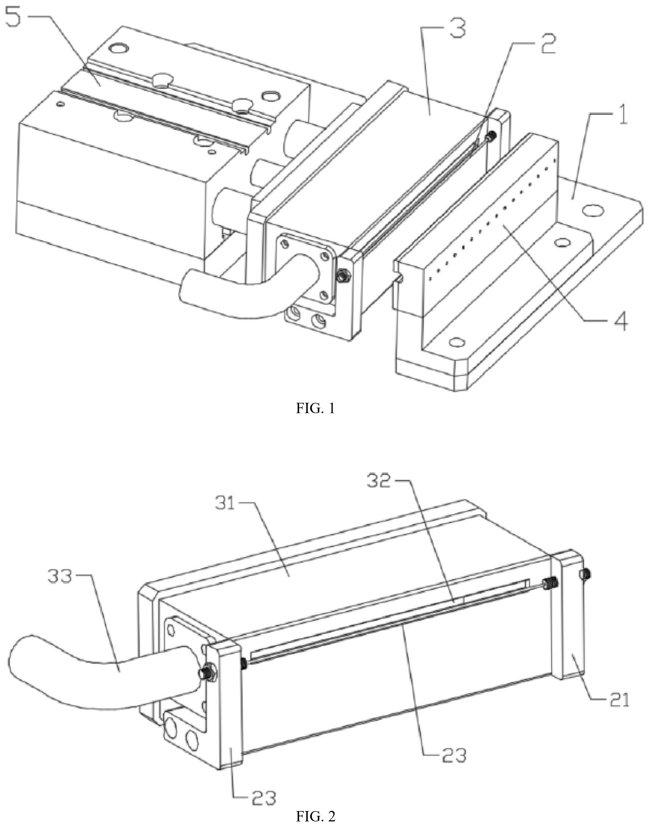

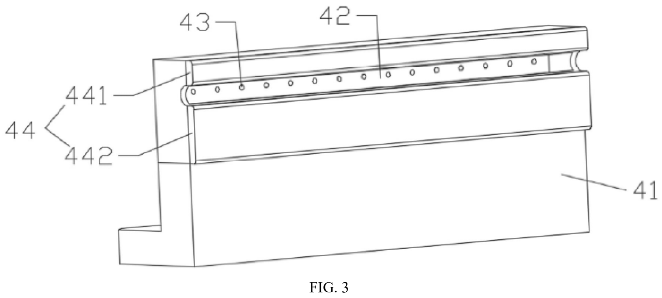

FIG. 1 shows a schematic diagram of an overall structure of a cutoff apparatus provided by an embodiment of the present disclosure; FIG. 2 shows a schematic structural diagram of the cutoff assembly and the dust removal assembly in FIG. 1; FIG. 3 shows a schematic structural diagram of the air inlet assembly in FIG. 1.

As shown in FIG. 1 to FIG. 3, an embodiment of the present disclosure provides a cutoff apparatus, which includes: a base plate 1;
a cutoff assembly 2 disposed on the base plate 1, wherein the cutoff assembly 2 comprises a cutoff frame, and a cutoff member 23 is disposed on the cutoff frame;
a dust removal assembly 3 disposed on the base plate 1, wherein the dust removal assembly 3 comprises a dust suction box 31 and a negative pressure member, a dust collection chamber is formed in the dust suction box 31, the negative pressure member is in communication with the dust collection chamber, the dust suction box 31 is provided with a dust suction port 32 on a side facing the cutoff member 23, and the dust suction port 32 is in communication with the dust collection chamber;
an air inlet assembly 4 disposed on the base plate 1, wherein the dust removal assembly 3 and the air inlet assembly 4 are respectively disposed on two sides of the cutoff member 23, the air inlet assembly 4 comprises an air inlet member 41, the air inlet member 41 is recessed on a side facing the cutoff member 23 to form a cutoff groove 42, and the air inlet member 41 is provided with an air inlet hole 43 in communication with the cutoff groove 42; and
a driving assembly 5 driving at least one of the cutoff assembly 2, the dust removal assembly 3, and the air inlet assembly 4 to move, such that the cutoff member 23 is located between the air inlet member 41 and the dust suction box 31, and the air inlet member 41 abuts the dust suction box 31;
wherein an opening of the cutoff groove 42 is capable of covering the dust suction port 32 and forming a working chamber for accommodating the cutoff member 23, and the cutoff member 23 cuts off a material within the working chamber, and air flowing into the working chamber through the air inlet hole 43 carries dust on the material toward the dust suction port 32 to flow into the dust collection chamber.

In some embodiments, the cutoff apparatus encloses the cutting position of the object to be cut by fitting the cutoff groove 42 over the dust suction port 32. It blows air on one side of the object to be cut through the air inlet hole 43 and suctions air on the other side of the object to be cut through the dust suction port 32, thereby forming a stable velocity flow field within the working chamber. Both opposite sides of the object to be cut are subjected to the force of the air, so as to further improve the collection of dust and other foreign matter generated after cutting the object to be cut, effectively preventing dust and other foreign matter from falling into the interior of the object to be cut after it is cut, thereby ensuring the safety performance of the object to be cut.

In some embodiments, the object to be cut includes a separator. In the current lithium battery winding process, a large number of ceramic particles and dust are generated when the separator is cut off, and the dust generated from cutting off is at risk of falling into the battery cell. Dust falling into the battery cell can pierce the separator, leading to internal short circuits in the battery cell and affecting the safety performance of the battery cell. When using the cutoff apparatus provided by the present disclosure, as the separator is being cut off, the air inlet assembly 4 blows air toward the dust removal assembly 3, and the dust generated from cutting off the separator is cleared by the dust removal assembly 3, reducing the risk of dust falling into the battery cell and ensuring the performance of the separator.

In some embodiments, the driving assembly 5 is configured to drive any one of the cutoff assembly 2, the dust removal assembly 3, and the air inlet assembly 4 to move. In some embodiments, the dust removal assembly 3 is fixedly disposed on the base plate 1, and the cutoff assembly 2 is disposed on the dust removal assembly 3. In some embodiments, the cutoff frame is fixedly disposed on the dust collection box, and the cutoff member 23 corresponds to the dust suction port 32 of the dust suction box 31. The driving assembly 5 includes a driving cylinder or an electric push rod, etc. The driving assembly 5 is disposed on a side of the air inlet assembly 4 away from the cutoff assembly 2, and the driving assembly 5 is connected to the air inlet assembly 4 to drive the air inlet assembly 4 to move in a direction toward or away from the dust suction assembly, so that the opening of the cutoff groove 42 covers the dust suction port 32.

In some embodiments, the driving assembly 5 is configured to drive two of the cutoff assembly 2, the dust removal assembly 3, and the air inlet assembly 4 to move. In some embodiments, the air inlet assembly 4 is fixedly disposed on the base plate 1, and the cutoff assembly 2 is disposed on the dust removal assembly 3. In some embodiments, the cutoff frame is fixedly disposed on the dust collection box, and the cutoff member 23 corresponds to the dust suction port 32 of the dust suction box 31. The driving assembly 5 is configured to drive the dust removal assembly 3 to move in a direction toward or away from the air inlet assembly 4. The driving assembly 5 includes a driving cylinder or an electric push rod, etc. The driving assembly 5 is disposed on a side of the dust removal assembly 3 away from the air inlet assembly 4, and the dust suction port 32 of the dust removal assembly 3 faces the air inlet assembly 4. The driving assembly 5 is connected to the dust removal assembly 3 to drive the dust removal assembly 3 to move in a direction toward or away from the air inlet assembly 4. The movement of the dust removal assembly 3 drives the synchronous movement of the cutoff assembly 2 and can cause the opening of the cutoff groove 42 to cover the dust suction port 32.

In some embodiments, the driving assembly 5 may also include a first driving member and a second driving member, wherein two of the cutoff assembly 2, the dust removal assembly 3, and the air inlet assembly 4 are respectively connected to the first driving member and the second driving member to achieve movement, thereby causing the opening of the cutoff groove 42 to cover the dust suction port 32.

In some embodiments, the driving assembly 5 is configured to drive all of the cutoff assembly 2, the dust removal assembly 3, and the air inlet assembly 4 to move. For example, the driving assembly 5 includes a first driving member, a second driving member, and a third driving member. The first driving member is configured to drive the movement of the cutoff assembly 2, the second driving member is configured to drive the movement of the dust removal assembly 3, and the third driving member is configured to drive the movement of the air inlet assembly 4, thereby ensuring that during the cutoff operation, the cutoff member 23 can be located between the air inlet member 41 and the dust suction box 31, and the air inlet member 41 abuts the dust suction box 31, causing the opening of the cutoff groove 42 to cover the dust suction port 32.

In some embodiments, the cutoff assembly 2 may also be fixedly disposed on the dust removal assembly 3. In this case, the driving assembly 5 may only include a first driving member and a second driving member, where the first driving member is configured to drive the movement of the dust removal assembly 3, which drives the synchronous movement of the cutoff assembly 2, and the second driving member is configured to drive the movement of the air inlet assembly 4, thereby causing the opening of the cutoff groove 42 to cover the dust suction port 32.

In some embodiments, the air inlet assembly 4 is fixedly disposed on the base plate 1, the cutoff assembly 2 is fixedly disposed on the dust removal assembly 3, and the driving assembly 5 employs a driving cylinder. The piston rod of the driving cylinder is connected to a side of the dust removal assembly 3 away from the cutoff assembly 2, and the extension and retraction of the driving cylinder's piston rod drives the dust removal assembly 3 to be disposed in a direction toward or away from the air inlet assembly 4. Through one driving cylinder, the movement of both the dust removal assembly 3 and the cutoff assembly 2 can be simultaneously driven, reducing costs and energy consumption.

In some embodiments, the dust suction box 31 and the air inlet member 41 are disposed at an interval, and the dust suction port 32 of the dust suction box 31 is aligned with the cutoff groove 42 of the air inlet member 41. The driving assembly 5 includes a driving cylinder, and the piston rod of the driving cylinder is connected to a side of the dust suction box 31 away from the air inlet member 41. The extension and retraction of the driving cylinder's piston rod drives the dust suction box 31 to move in a direction toward or away from the cutoff groove 42.

Referring to FIG. 1 and FIG. 2, the cutoff frame includes a first frame body 21 and a second frame body 22. The cutoff member 23 is disposed between the first frame body 21 and the second frame body 22. The first frame body 21 and the second frame body 22 are respectively assembled and connected to two opposite side walls of the dust suction box 31, and the cutoff member 23 and the dust suction port 32 are disposed at an interval in the opening direction of the dust suction port 32. For example, the first frame body 21 and the second frame body 22 are both detachably disposed on the dust suction box 31 via bolts.

In some embodiments, the cutoff member 23 includes a thermal radiation cutoff member 23, a heating wire cutoff member 23, a physical blade cutoff member 23, etc. In some embodiments, the cutoff member 23 employs a resistance wire, which generates heat to achieve the cutoff of the object to be cut. In some embodiments, the axial direction of the resistance wire is the same as the extending direction of the dust suction port 32, thereby ensuring that the dust suction port 32 can absorb the impurities generated during the cutoff to the maximum extent.

Referring to FIG. 1 and FIG. 2, the dust removal assembly 3 also includes a dust suction pipe 33. A first end of the dust suction pipe 33 is in communication with the negative pressure member, and a second end of the dust suction pipe 33 is in communication with the dust collection chamber. The dust collection chamber and the negative pressure member are connected through the dust suction pipe 33. The negative pressure member, through negative pressure action, imparts a suction force to the dust suction port 32 of the dust suction box 31, thereby allowing it to absorb impurities in the vicinity of the cutoff member 23 at the position corresponding to the dust suction port 32.

Referring to FIG. 1 to FIG. 3, in some embodiments, a plurality of the air inlet holes 43 are provided, and the plurality of air inlet holes 43 are arranged at intervals along the extending direction of the dust suction port 32. Through the provision of multiple air inlet holes 43, external air can be blown uniformly toward the cutoff member 23, further ensuring the absorption of impurities generated by the cutoff by the dust suction box 31. In some embodiments, compared to a single air inlet hole 43, the apertures of multiple air inlet holes 43 are smaller. With the negative pressure force of the negative pressure member remaining constant, the force of the air blown toward the cutoff member 23 through the multiple air inlet holes 43 is significantly greater than the force of air blown toward the cutoff member 23 through a single air inlet hole 43. The dust suction effect can be improved by the greater air force.

In some embodiments, the axial direction of the air outlet end of the air inlet hole 43 is parallel to the axial direction of the dust suction port 32, and when the opening of the cutoff groove 42 covers the dust suction port 32, the air inlet hole 43 is disposed corresponding to the dust suction port 32. The air outlet end of the air inlet hole 43 is in communication with the cutoff groove 42, and the air inlet end of the air inlet hole 43 is configured to be in communication with the external air. The axial direction of the air outlet end of the air inlet hole 43 being parallel to the axial direction of the dust suction port 32 allows the air blown from the air outlet end of the air inlet hole 43 to blow directly toward the dust suction port 32, so that dust and impurities generated from the cutoff can be directly blown toward the dust suction port 32 and collected by the dust suction box 31.

In some embodiments, the air inlet hole 43 is provided through the air inlet member 41 along the axial direction of the dust suction port 32. In this case, the axial direction of the air inlet end of the air inlet hole 43 and the axial direction of the air outlet end of the air inlet hole 43 are collinear. When external air enters the working chamber through the air inlet hole 43, its air speed loss within the air inlet hole 43 is small, and the air speed is high. After passing through the working chamber, the air will, to the greatest extent, blow the dust and impurities within the working chamber into the dust suction box 31, greatly reducing the risk of dust and impurities falling into the battery cell and ensuring the safety performance of the battery cell.

**In** some embodiments, the air inlet assembly 4 further includes a buffering member 44 disposed on the air inlet member 41. The buffering member 44 and the cutoff groove 42 are disposed on the same side of the air inlet member 41. The buffering member 44 includes a first buffering portion 441 and a second buffering portion 442, and the first buffering portion 441 and the second buffering portion 442 are respectively disposed on two sides of the cutoff groove 42 perpendicular to its own extending direction. By disposing the first buffering member 44 and the second buffering member 44 on the two sides of the cutoff groove 42 respectively, after the dust suction box 31 comes into contact with the buffering member 44, the dust suction box 31, the buffering member 44, and the air inlet member 41 form a sealed working chamber, thus achieving a fully enclosed configuration and further ensuring the hermeticity of the working chamber. Under the buffering action of the buffering member 44, the dust suction box 31 can also move toward the air inlet member 41, thereby ensuring the effect of the cutoff member 23 in cutting off the separator. For example, the buffering member 44 employs a rubber pad. Through the contact between the buffering member 44 and the dust suction box 31 the possibility of new impurities being generated can also be prevented from direct contact between metals.

Referring to FIG. 1 to FIG. 3, the present disclosure also provides a winding machine, which includes the cutoff apparatus of the present disclosure.

It should be noted that references in the specification to "an embodiment," "embodiments," "an example embodiment," "some embodiments," etc., indicate that the described embodiment(s) may include a particular feature, structure, or characteristic, but not every embodiment necessarily includes the particular feature, structure, or characteristic. Moreover, such phrases are not necessarily referring to the same embodiment. Further, when a particular feature, structure, or characteristic is described in connection with an embodiment, it is within the knowledge of one skilled in the art to effect such feature, structure, or characteristic in connection with other embodiments whether or not explicitly described.

It should be readily understood that the terms "on," "over," and "above" in this disclosure should be interpreted in the broadest sense, such that "on" means not only "directly on something" but also includes "on something" with intermediate features or layers therebetween, and "over" or "above" not only includes the meaning of "over" or "above something" but may also include "over" or "above something" with no intermediate features or layers therebetween (i.e., directly on something).

In addition, spatially relative terms, such as "below," "beneath," "lower," "above," "upper," and the like, may be used herein for ease of description to describe one element's or feature's relationship to another element(s) or feature(s) as illustrated in the drawings. The spatially relative terms are intended to encompass different orientations of the device in use or operation in addition to the orientation depicted in the drawings. The apparatus may be otherwise oriented (rotated 90 degrees or at other orientations) and the spatially relative descriptors used herein may be interpreted accordingly.

**It** should be noted that, herein, relational terms such as "first" and "second," and the like, are used solely to distinguish one entity or action from another entity or action without necessarily requiring or implying any actual such relationship or order between such entities or actions. Moreover, the terms "comprising," "including," or any other variation thereof, are intended to cover a non-exclusive inclusion, such that a process, method, article, or device that comprises a series of elements not only includes those elements, but also includes other elements not explicitly listed, or also includes elements inherent to such process, method, article, or device. Without more constraints, an element defined by the statement "comprising a..." does not preclude the presence of additional identical elements in the process, method, article, or device that comprises the element.

Finally, it should be noted that the foregoing embodiments are merely intended for describing the technical solutions of the present disclosure, but not for limiting it. Although the present disclosure has been described in detail with reference to the foregoing embodiments, persons of ordinary skill in the art should understand that they can still make modifications to the technical solutions described in the foregoing embodiments, or make equivalent substitutions for some or all of the technical features thereof; and these modifications or substitutions do not make the essence of the corresponding technical solutions depart from the scope of the technical solutions of embodiments of the present disclosure.

## Claims

1. A cutoff apparatus, comprising:
a base plate;
a cutoff assembly disposed on the base plate, wherein the cutoff assembly comprises a cutoff frame, and a cutoff member is disposed on the cutoff frame;
a dust removal assembly disposed on the base plate, wherein the dust removal assembly comprises a dust suction box and a negative pressure member, a dust collection chamber is formed within the dust suction box, the negative pressure member is in communication with the dust collection chamber, the dust suction box is provided with a dust suction port on a side facing the cutoff member, and the dust suction port is in communication with the dust collection chamber;
an air inlet assembly disposed on the base plate, wherein the dust removal assembly and the air inlet assembly are respectively disposed on two sides of the cutoff member, the air inlet assembly comprises an air inlet member, the air inlet member is recessed on a side facing the cutoff member to form a cutoff groove, and the air inlet member is provided with an air inlet hole in communication with the cutoff groove; and
a driving assembly driving at least one of the cutoff assembly, the dust removal assembly, and the air inlet assembly to move, such that the cutoff member is located between the air inlet member and the dust suction box, and the air inlet member abuts the dust suction box;
wherein an opening of the cutoff groove is capable of covering the dust suction port and forming an working chamber for accommodating the cutoff member, and the cutoff member cuts off a material within the working chamber, and air flowing into the working chamber through the air inlet hole carries dust on the material toward the dust suction port to flow into the dust collection chamber.

2. The cutoff apparatus of claim 1, wherein a plurality of the air inlet holes are provided, and the plurality of air inlet holes are arranged at intervals along an extending direction of the dust suction port.

3. The cutoff apparatus of claim 1 or 2, wherein an axial direction of an air outlet end of the air inlet hole is parallel to an axial direction of the dust suction port, and when the opening of the cutoff groove covers the dust suction port, the air inlet hole is disposed corresponding to the dust suction port.

4. The cutoff apparatus of any one of claims 1 to 3, wherein the air inlet hole is provided through the air inlet member along the axial direction of the dust suction port.

5. The cutoff apparatus of any one of claims 1 to 4, wherein the air inlet assembly further comprises a buffering member disposed on the air inlet member, the buffering member and the cutoff groove are disposed on a same side of the air inlet member, the buffering member comprises a first buffering portion and a second buffering portion, and the first buffering portion and the second buffering portion are respectively disposed on two sides of the cutoff groove perpendicular to its own extending direction.

6. The cutoff apparatus of any one of claims 1 to 5, wherein the cutoff frame comprises a first frame body and a second frame body, the cutoff member is disposed between the first frame body and the second frame body, the first frame body and the second frame body are respectively assembled and connected to two opposite side walls of the dust suction box, and the cutoff member and the dust suction port are disposed at an interval in an opening direction of the dust suction port.

7. The cutoff apparatus of any one of claims 1 to 6, wherein the driving assembly drives the dust suction box to move in a direction toward or away from the cutoff groove, and the dust suction box drives the cutoff member to move synchronously.

8. The cutoff apparatus of any one of claims 1 to 7, wherein the dust suction box and the air inlet member are disposed at an interval, and the dust suction port of the dust suction box is aligned with the cutoff groove of the air inlet member; the driving assembly comprises a driving cylinder, and a piston rod of the driving cylinder is connected to a side of the dust suction box away from the air inlet member.

9. The cutoff apparatus of any one of claims 1 to 8, wherein the dust removal assembly further comprises a dust suction pipe, a first end of the dust suction pipe is in communication with the negative pressure member, and a second end of the dust suction pipe is in communication with the dust collection chamber.

10. A winding machine, comprising: the cutoff apparatus of any one of claims 1 to 9.
